# EUROPEAN PATENT SPECIFICATION

(11) **EP 4 228 785 B1**
(45) Date of publication and mention of the grant of the patent: **03.01.2024**
(21) Application number: 22707226.1
(22) Date of filing: 14.02.2022
(51) Int. Cl.: A47J 31/44, B01D 39/08, B01D 39/16, A47J 31/06, B01D 39/20

(54) **DEVICE FOR FORMING TURBULENCE IN A LIQUID, ESPECIALLY FOR SOLID/LIQUID MIXTURES**
VORRICHTUNG ZUR TURBULENZBILDUNG IN EINER FLÜSSIGKEIT, INSBESONDERE FÜR FEST-FLÜSSIG-GEMISCHE
DISPOSITIF DE FORMATION DE TURBULENCE DANS UN LIQUIDE, EN PARTICULIER POUR DES MÉLANGES SOLIDES/LIQUIDES

(30) Priority: 15.02.2021 IT 202100003326
(43) Date of publication of application: 23.08.2023
(73) Proprietor: SAATI S.p.A., 22070 Appiano Gentile (CO) (IT)
(72) Inventor: GRIMOLDI, Elisa, 22070 Appiano Gentile (CO) (IT); LUCIGNANO, Carmine, 22070 Appiano Gentile (CO) (IT); CANONICO, Paolo, 22070 Appiano Gentile (CO) (IT)
(74) Representative: Rastelli, Franco
(86) International application number: PCT/IB2022/051276
(87) International publication number: WO 2022/172233

(56) References cited:
- WO-A1-80/01451
- DE-A1- 19 706 523
- US-A- 3 765 537
- US-A1- 2016 135 635
- US-A1- 2020 113 369

## Description

### BACKGROUND OF THE INVENTION

The present invention relates to a device for forming turbulence in a liquid, starting from solid/liquid mixtures.

In the preparation of coffee, filters are used that carry out a solid/liquid separation, with the simultaneous creation of turbulence in the liquid that passes through the filter medium, so as to obtain a liquid filtrate on the surface of which there is a desired amount of foam. In these applications, the foam, which represents one of the fundamental parameters for determining good quality of the beverage, is generated by the turbulent motion of the liquid inside the holes of the filter used to retain the coffee powder.

In this type of machine, the water, usually brought to a pressure of 9 bar and a temperature of 90-95°C, is passed through a metal filter with very small holes that serve the purpose of retaining the finely ground coffee powder and forming, at the same time, an emulsion of gas and liquid during dispensing, thus forming the foam. The traditional filters used for this purpose are in particular constituted by a perforated metal disc of variable size, provided with circular holes having a diameter of between 250 and 300 microns, arranged regularly on the surface of the metal disc so that the open area, i.e. the total perforated surface of the disc, has a value of between 3% and 5% of the total surface of the latter. In this way, a beverage is obtained which, as it leaves the filter, has a surface layer of foam, formed by the dispersion of gas (air), during the stage of the liquid phase passing through the filter.

The main drawback of the filters described above is represented by the small size of the holes, in the order of microns, required to retain the coffee powder and yet responsible for a limited turbulence and therefore also for the formation of foam, on the liquid downstream of the filter, the amount of which depends on the size of the holes in the metal disc forming the filter.

A further drawback of the aforementioned prior art products is represented by the need to produce the filters with metal material, the only material capable of combining mechanical resistance to the pressure of the liquid passing through it with the presence of numerous holes in its surface, required to retain the coffee powder.

Conventional filters of the type in question therefore have a structure that does not allow them to control the volume of the foam formed downstream of the filter, which is in fact closely related to the number and size of the holes present in the surface of the latter, in turn linked to the small size of the coffee powder that has to be retained by the filter.

DE 197 06 523 A1 concerns a filter for beverages, consisting of a metal plate detachably coupled to a filter, also made of metal or plastic material.

US 2020/113369 A1 illustrates a filter for beverages consisting of a steel filter enclosed between two perforated plates.

US 2016/135635 A1 describes a filter formed by a filtering plate held on a perforated disc by means of a corresponding support plate.

### SUMMARY OF THE INVENTION

The main object of the present invention is therefore to provide a device for forming turbulence in a liquid, starting from solid/liquid mixtures, which allows the formation of turbulence and therefore also of foam on the liquid passing through the device to be controlled, independently of its function of retaining the powder material, so as to obtain foam volumes even higher than those achievable with the filters of the prior art.

This and other objects are achieved by the device of claim 1. Preferred embodiments of the invention will be apparent from the remaining claims.

In comparison with conventional systems for the formation of foams in a liquid phase, thanks to the structure of the synthetic monofilament woven fabric, incorporated or embedded in the thickness of the perforated plastic material support, the positioning of the woven fabric meshes with respect to the holes in the support, and therefore the openings for formation of the turbulence are kept uniform and constant over the entire surface through which the liquid phase passes.

The invention also offers the advantage of allowing the volume of foam formed downstream of the filter to be modulated, in particular without compromising the ability of the filter to effectively retain the powder material in solid/liquid mixtures.

### BRIEF DESCRIPTION OF THE DRAWINGS

These and other objects, advantages and characteristics result from the following description of some preferred embodiments of the device of the invention illustrated, by way of non-limiting examples, in the figures of the attached drawing sheets.

In these:
- Figure 1 is a perspective view of a conventional filter used in espresso coffee machines;
- Figures 2 and 3 illustrate in exploded and section views, respectively, a first embodiment of the device of the invention;
- Figures 4 and 5 illustrate the perforated disc and the woven fabric, respectively, forming the device of Figures 2 and 3;
- Figures 6 and 7 illustrate in exploded and section views, respectively, a variant of the device of Figures 2 and 3;
- Figures 6A and 7A illustrate in exploded and section views, respectively, a further variant of the device of Figures 2 and 3;
- Figures 8 and 9 illustrate the device of the invention with a different dimensional combination of the meshes of the woven fabric and the holes of the disc;
- Figure 10 illustrates the trend of the turbulence index in the device of the invention, as a function of its face velocity;
- Figure 11 illustrates the trend of the turbulence index in the device of the invention, as a function of the fabric mesh opening.

### DESCRIPTION OF THE PREFERRED EMBODIMENTS

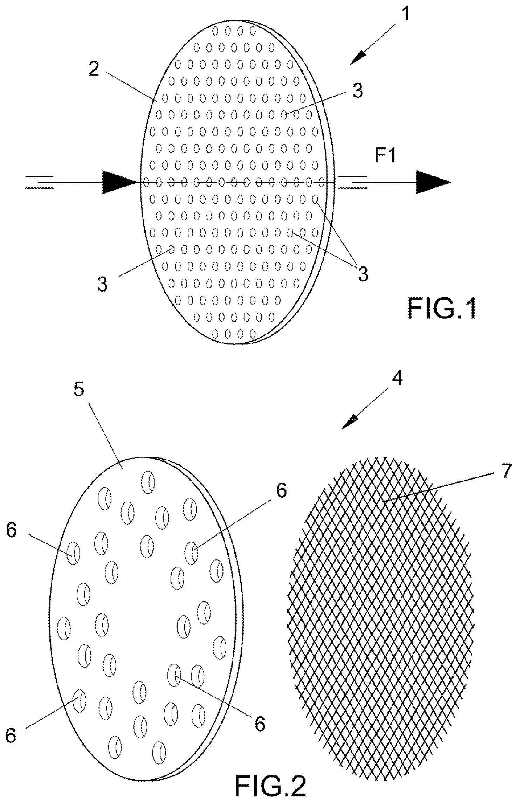

The prior art filter illustrated in Figure 1 consists of a metal disc 2 having holes 3 which, being dedicated to the function of retaining the coffee powder, have a very small diameter, usually of between 250 and 300 microns.

Due to the presence of the holes 3, the water that passes through the filter 1 is subjected to turbulence which, on the flow F1 downstream of the latter, generates the formation of a foam on the liquid filtrate. However, the small size of the holes 3, required to retain the coffee powder, does not allow modulation of the amount of foam formed on the surface of the liquid phase that passes through the filter 1.

Furthermore, the very presence of numerous small holes 3, combined with the pressure of the liquid that passes through them, requires the use of a metal material, the only material capable of offering the required mechanical strength, but also more expensive and more difficult to work with than other materials, such as plastic materials.

In order to modulate the formation of foam on the liquid filtrate, while leaving unaltered the necessary function of retaining the solid phase, the device of the invention illustrated in Figures 2 to 5 has been produced.

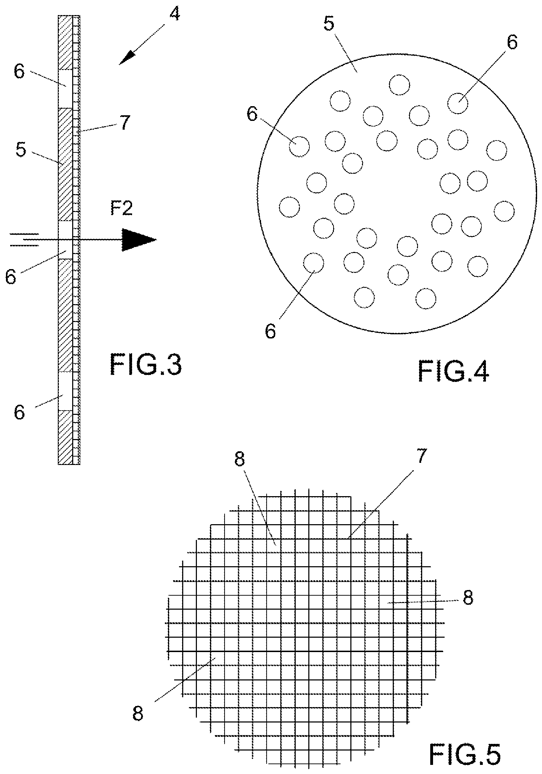

This device, indicated as a whole with reference number 4 in Figures 2 and 3, consists of a support 5 of rigid material, preferably a disc of injection-moldable plastic material, having a plurality of through holes 6. According to the invention, moreover, attached by co-molding on a surface or face of the support 5 is a synthetic monofilament woven fabric 7, which represents the component of the device 4 with the function of retaining the solid phase and whose meshes 8 are sized on the basis of the corresponding dimensions of the latter (Figure 5).

In the co-molding operation, the molten polymer forming the support 5 is injected under pressure on the woven fabric 7, leaving open the areas of the woven fabric which are located in correspondence with the holes 6 of the support and through which the liquid to be subjected to the formation of turbulence is passed. In this way, the woven fabric 7 is incorporated into the thickness of the support 5, preferably close to one of its faces, substantially forming a single body.

For its part, the support 5 performs a function of supporting the woven fabric 7, also lowering the open area (meaning the percentage of open surface of the meshes 8 on the total surface area of the woven fabric) of the latter.

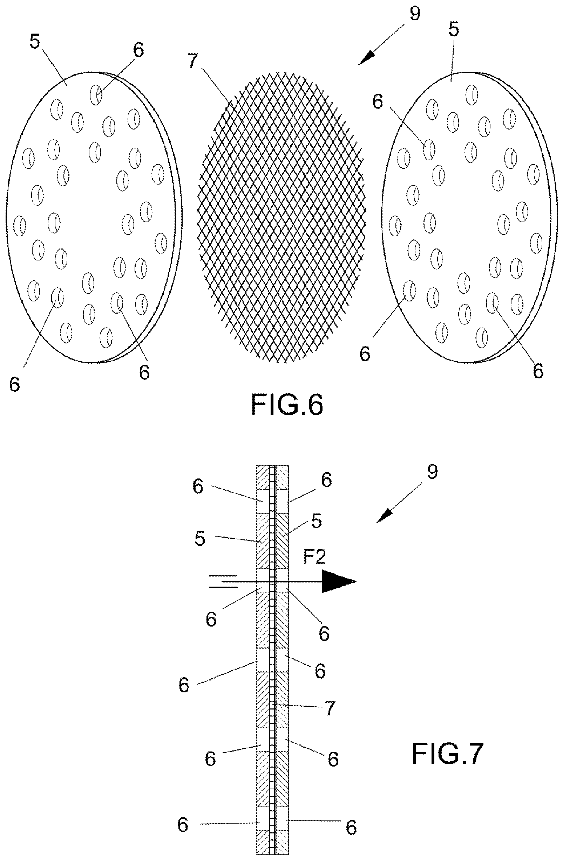

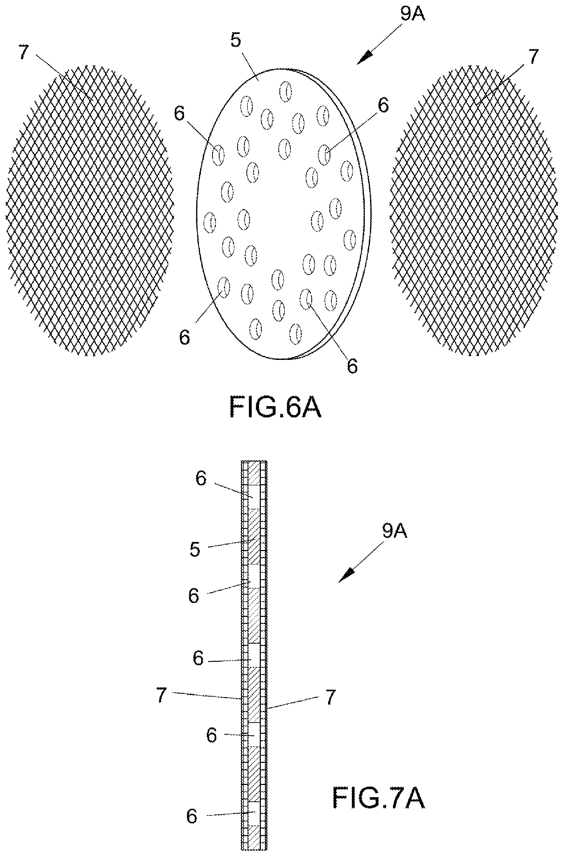

In the variant 9 of the device of the invention illustrated in Figures 6 and 7, the synthetic monofilament woven fabric 7 is fixed, on both faces, to a respective rigid support 5, similar to that described for the device 4 in Figure 2 and whose function is to increase the stability of the device as a whole. In this embodiment the supports 5 are fixed, on the opposite faces of the woven fabric 7, maintaining the alignment between the respective holes 6 in the transverse direction of the filter, or of said supports, necessary for passage of the liquid filtrate.

As illustrated in Figures 3 and 7, the holes 6 of the support 5 upstream of the woven fabric 7 direct the flow F2 of the liquid/solid mixture towards the latter, generating turbulence which, in turn, determines the formation of a foam on the filtrate discharged downstream of the woven fabric 7.

In the variant 9A of the filter of the invention, as illustrated in Figures 6A and 7A, the synthetic monofilament woven fabric 7 is fixed on both faces of the same rigid support 5.

Preferred examples of monofilament woven fabrics suitable for the invention are polyester or polyamide woven fabrics, of the 20.200 type (20 threads/cm with a diameter of 200 µm), 24.160 type, 29.145 type, with mesh opening value (i.e. the distance between contiguous weft and warp threads) of between 10 microns and 400 microns, thus forming an open area of between 10 and 50%. In particular, monofilament woven fabrics with 10 to 250 threads/cm, diameter of the threads from 19 to 200 microns and a mesh opening from 10 to 400 microns are suitable for the invention.

Examples of materials suitable for the support 5 are polyamide resins, possibly glass-filled, Triton^{®}, Ultem^{®}, Peek^{®} polysulfone or polyether sulfone, with holes 6 having a diameter of between 0.5 and 6 mm.

From the described composition of support 5 and woven fabric 7, the filter of the invention has total open area values of between 0.2 and 10%, suitable for the formation of foam on the liquid filtrate as it leaves the device of the invention.

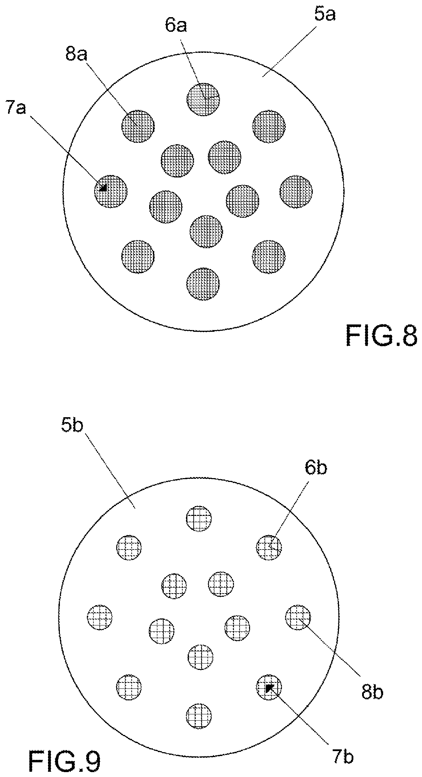

As shown in Figures 8 and 9, the same total open area value can be achieved:
- either with a support 5a provided with holes 6a of large diameter, for example of between 2 and 4.5 mm, in combination with a woven fabric 7a with meshes 8a having a low mesh opening, for example of between 35 and 45 microns, so as to have a device with a total open area of between 0.2 and 10% (Figure 8);
- or with a support 5b provided with holes 6b of small diameter, for example of between 1 and 3 mm, in combination with a woven fabric 7b with meshes 8b having a high mesh opening, for example of between 200 and 300 microns, so as to form a device with a total open area of between 0.2 and 10% (Figure 9).

In this way it is possible to modulate the speed of passing through a single mesh of the woven fabric and, consequently, also the turbulence of the flow of liquid as it leaves the device. In fact, once the total open area of the device of the invention, meaning the percentage of the area available for passage of the liquid through the holes 6 of the rigid support 5 and through the meshes 8 of the woven fabric 7, has been fixed or pre-established with respect to the total surface area of the same support 5, the turbulence in the liquid filtrate will be given by the speed of passing through a single mesh 8 and by the size of the opening of the woven fabric 7. Thus, for example, a total open area of 8% means that, on 100 mm² of the surface of the support 5, 8 mm² is the surface area available for passage of the liquid through the holes of the rigid support 5 and of the meshes of the woven fabric 7.

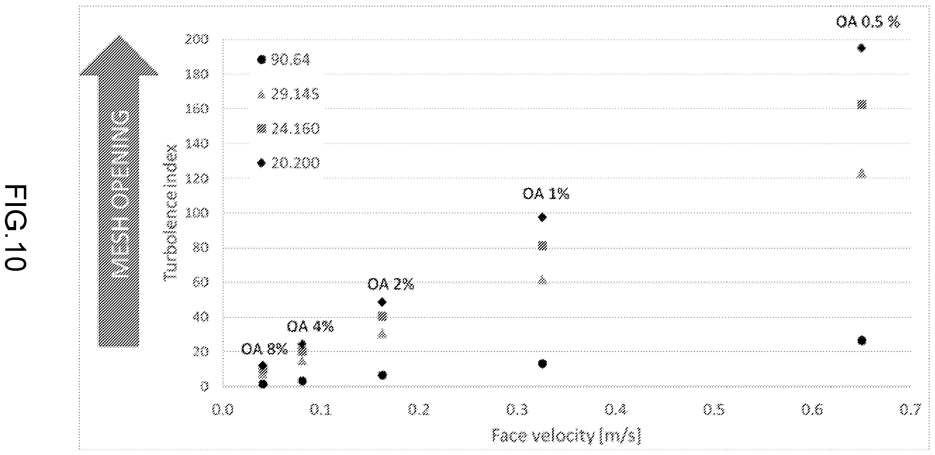

Figure 10 shows the trend of the turbulence index of the liquid filtrate, calculated as the speed of passing through the device 4,9,9A (face velocity) multiplied by the mesh opening of the woven fabric, as a function of the face velocity of woven fabric 90.64, 29.145, 24.160, and 20.200, calculated for an Open Area (OA) of 8%, 4%, 2%, 1%, and 0.5%, respectively.

From an examination of this figure, it will be seen that the higher the face velocity, the higher the turbulence index. Furthermore, the rise of this index increases as the value of the mesh opening of the woven fabric increases.

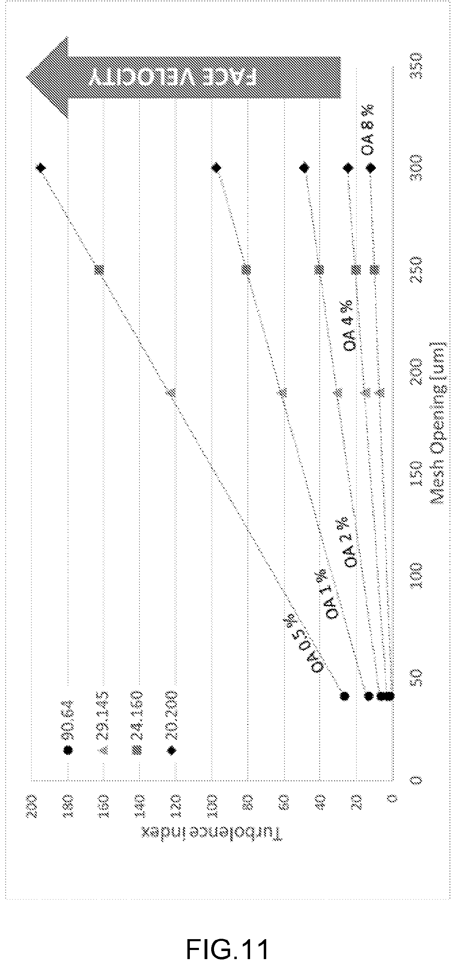

Figure 11 shows the trend of the turbulence index as a function of the mesh opening. From this figure we can see the increase in the turbulence index with the mesh opening of the woven fabric and with the Open Area of the device.

Solid/liquid mixtures can be treated with the device of the invention, such as for example mixtures for the preparation of coffee, characterized by the need to create turbulence.

The invention will now be described with reference to the following examples.

### Comparative Example

### Filter with open area of 4% (prior art)

A solid/liquid mixture is prepared, consisting of coffee powder in water.

To separate the solid particles from the liquid phase, a filter is used consisting of a metal disc having an area of 615 mm² and 50 holes/cm² with a diameter of 300 microns, corresponding to an Open Area (OA) of the filter of 4%. Given a face velocity of 0.00325 m/s, meaning the speed of the water passing through the filter, calculated on the delivery of a volume of 30 ml of liquid filtrate in a time of 15 s (face velocity = volume of liquid/filter surface x time), the speed of passing through the single holes of the metal disc will be 0.081 m/s (face velocity/OA) and the turbulence index (given by this speed of passing through multiplied by the diameter of the filter holes) will be 20.31 (0.081 m/s x 300µm). In this way a liquid filtrate is obtained containing about 16% of foam on the total volume.

### Example 1

### Device with a total open area of 4%

The solid/liquid mixture of the previous example is passed through the device of the invention, comprising a synthetic monofilament woven fabric 7, having 24 threads/cm with a diameter of 160 microns, a mesh opening of 250 microns and an open area of 37%. The woven fabric 7 is fixed by co-molding (i.e. by injection molding a support disc 5 of perforated plastic material, which has a synthetic monofilament woven fabric disc incorporated in its thickness, preferably arranged close to one of its faces) to a support 5 of glass-filled polyamide, having a discoidal shape with an area of 615 mm² and 24 holes with diameter 1.88 mm.

Overall, the total Open Area of the device of the invention has a value of 4%. Given a face velocity of 0.00325 m/s, meaning the speed of passing through the device by a volume of 30 ml of liquid filtrate in a time of 15 s, according to the calculation method indicated in the previous comparative example, the speed of passing through a single mesh 8 of the woven fabric 7 will be 0.081 m/s (calculated as in the comparative example) and the turbulence index (given by this speed of passing through multiplied by the woven fabric mesh opening value) will be 20.31 (calculated as in the comparative example). In this way a liquid filtrate is obtained containing about 16% of foam on the total volume. The device of the invention therefore allows the desired turbulence index to be reached, with a considerably lower number of holes in the support disc than the number that has to be provided in the prior art metal disc.

### Example 2

### Device with a total open area of 4%

The solid/liquid mixture of the comparative example is filtered with the device of the invention prepared with a synthetic monofilament woven fabric 7, having 20 threads/cm with a diameter of 200 microns, and having a mesh opening of 300 microns and an open area of 35%. The woven fabric 7 is fixed by co-molding on the surface of the support 5 of Example 1, with a discoidal shape having an area of 615 mm² and 24 holes with a diameter of 1.93 mm. Overall, the total open area of the device of the invention has a value of 4%. Given a face velocity of 0.00325 m/s, as calculated according to Example 1, the speed of passing through a single mesh 8 of the woven fabric 7 will be again 0.081 m/s, but this time with a turbulence index of 24.37. Therefore, with the same dimensions of disc 5 and the same total open area, the device of Example 2 produces a greater turbulence and therefore a greater amount of foam (approximately 18%) than the device of Example 1.

### Example 3

### Device with a total open area of 2%

The solid/liquid mixture of the comparative example is treated in the device of the invention prepared starting from a synthetic monofilament woven fabric 7 according to Example 1, fixed by co-molding on the surface of a support 5 having a discoidal shape with an area of 615 mm² and 24 holes with a diameter of 1.33 mm. Overall, the total open area of the device of the invention has a value of 2%. Given a face velocity of 0.00325 m/s, as calculated according to Example 1, the speed of passing through a single mesh 8 of the woven fabric 7 will be 0.162 m/s, thus producing a turbulence index of 40.62 and a foam of approximately 20% volume. The greater turbulence on the liquid filtrate as it leaves the device according to this example, compared to Example 1, was therefore achieved through a reduction of the open area from 4% to 2%, in turn obtained by using a disc 5 provided with smaller holes.

### Example 4

### Device with a total open area of 2%

The solid/liquid mixture of the comparative example is passed through the device of the invention prepared with a synthetic monofilament woven fabric 7 having 20 threads/cm with a diameter of 200 microns, having a mesh opening of 300 microns and an open area of 35%, fixed by co-molding on the surface of a support 5 having a discoidal shape with an area of 615 mm² and 24 holes with a diameter of 1.37 mm. Overall, the total open area of the device of the invention has a value of 2%. Given a face velocity of 0.00325 m/s, as calculated according to Example 1, the speed of passing through a single mesh 8 of the woven fabric 7 will be 0.162 m/s, thus producing a turbulence index of 48.75 and a foam of approximately 25% volume. The device according to this example therefore allows a higher turbulence index to be obtained than that of Example 3, with a same total open area value.

The results of the previous examples have been collected in the following table:

| Example | Total open area | **Woven fabric** Mesh opening Open Area | **Disc** Number of holes | **Disc** Hole diameter | Speed of passing through [m/s] | Turbulence (index) |
|---|---|---|---|---|---|---|
| Comparative example (prior art) | 4% | NA | 50 holes/cm² distributed over the entire available surface | 300 µm | 0.081 | 20.31 |
| 1 | 4% | 250 µm | 24 | 1.88 mm | 0.081 | 20.31 |
| | | 37% | | | | |
| 2 | 4% | 300 µm | 24 | 1.93 mm | 0.081 | 24.37 |
| | | 35% | | | | |
| 3 | 2% | 250 µm | 24 | 1.33 mm | 0.162 | 40.62 |
| | | 37% | | | | |
| 4 | 2% | 300 µm | 24 | 1.37 mm | 0.162 | 48.75 |
| | | 35% | | | | |

Changes may be made to the invention as described above and illustrated in the figures of the attached drawing sheets, in order to produce variants which still fall within the scope of the appended claims.

Thus, for example, the number of holes in the disc could be decreased, in order to correspondingly decrease the open area value of the device. The device of Example 4 could also be modified, by reducing the number of holes in the disc from 24 to 6 and bringing the Open Area of the device from 2% to 0.5%, with an increase in the turbulence index from 48.75 to 195.

## Claims

1. Device for forming turbulence in a liquid from solid/liquid mixtures, **characterized in that** it comprises at least one woven fabric (7) of synthetic monofilament formed as a single body by co-molding on at least one face of at least one support (5) of plastic material provided with through holes (6), in which said woven fabric (7) is incorporated into the thickness of said support (5) thus forming a single body, said co-molding operation being carried out by injecting, under pressure on said woven fabric (7), the molten polymer forming said support (5), leaving open the areas of the woven fabric which are located in correspondence with the holes (6) of the support (5) and through which the liquid to be subjected to the formation of turbulence is passed, in which the positioning of the woven fabric meshes with respect to said holes (6) in the support (5), and therefore the openings for formation of the turbulence, are kept uniform and constant over the entire surface of said device through which the liquid phase passes.

2. Device according to claim 1, **characterized in that** said synthetic monofilament is made of polyester or polyamide.

3. Device according to claim 1, **characterized in that** it provides rigid supports (5) fixed on both faces of said woven fabric (7) with their holes (6) arranged mutually aligned in the transverse direction of said supports.

4. Device according to claim 1, **characterized in that** it provides said woven fabric (7) arranged on both faces of said support (5).

5. Device according to claim 2, **characterized in that** said at least one woven fabric (7) is a monofilament woven fabric with a mesh opening value of between 10 and 400 microns and with an open area of between 10 and 50%.

6. Device according to claim 5, **characterized in that** said at least one woven fabric (7) is a monofilament woven fabric with 10 to 250 threads/cm, thread diameter from 19 to 200 microns and a mesh opening from 10 to 400 microns.

7. Device according to claim 3, **characterized in that** said at least one support (5) consists of a disc of plastic material, having through holes (6) with a diameter of between 0.5 and 6 mm.

8. Device according to claim 7, **characterized in that** it has a total open area of between 0.2 and 10%, in which said total open area of said device represents the percentage of the area available for passage of the liquid through said holes (6) of the rigid support (5) and through the meshes (8) of said woven fabric (7).

9. Device according to one or more of the preceding claims, **characterized in that** it has a total open area of between 0.2 and 10% and at least one support (5a) having holes (6a) with a diameter of between 0.5 and 6 mm, in combination with a woven fabric (7a) of synthetic monofilament having meshes (8a) with mesh opening of between 10 and 400 microns.

10. Device according to one or more of the preceding claims, **characterized in that** it has a total open area of between 0.2 and 10% and at least one support (5b) having holes (6b) with a diameter of between 0.5 and 6 mm, in combination with a woven fabric (7b) of synthetic monofilament having meshes (8b) with mesh opening of between 10 and 400 microns.

## Patentansprüche

1. Vorrichtung zur Bildung von Turbulenzen in einer Flüssigkeit aus Fest-Flüssig-Gemischen, **dadurch gekennzeichnet, dass** sie mindestens ein Gewebe (7) aus synthetischem Einzelfaden umfasst, das als ein einziger Körper durch gemeinsames Formen auf mindestens einer Seite mindestens eines Trägers (5) aus Kunststoffmaterial, der mit Durchgangslöchern (6) versehen ist, gebildet wird, wobei das genannte Gewebe (7) in die Dicke des genannten Trägers (5) eingearbeitet ist, wodurch ein einziger Körper gebildet wird, wobei das genannte gemeinsame Formen durch Einspritzen des geschmolzenen Polymers, das den genannten Träger (5) bildet, unter Druck auf das Gewebe (7) durchgeführt wird, das geschmolzene Polymer, das den genannten Träger (5) bildet, unter Druck auf das Gewebe (7) gespritzt wird, wobei die Bereiche des Gewebes offen gelassen werden, die sich in Übereinstimmung mit den Löchern (6) des Trägers (5) befinden und durch die die Flüssigkeit, die der Bildung von Turbulenzen unterworfen werden soll, geleitet wird, wobei die Positionierung der Maschen des Gewebes in Bezug auf die genannten Löcher (6) im Träger (5) und somit die Öffnungen für die Bildung der Turbulenzen über die gesamte Oberfläche der genannten Vorrichtung, die von der flüssigen Phase durchlaufen wird, einheitlich und konstant gehalten werden.

2. Vorrichtung gemäß Anspruch 1, **dadurch gekennzeichnet, dass** der genannte synthetische Einzelfaden aus Polyester oder Polyamid hergestellt ist.

3. Vorrichtung gemäß Anspruch 1, **dadurch gekennzeichnet, dass** sie starre Träger (5) aufweist, die auf beiden Seiten des genannten Gewebes (7) befestigt sind, wobei ihre Löcher (6) in Querrichtung der genannten Träger zueinander ausgerichtet sind.

4. Vorrichtung gemäß Anspruch 1, **dadurch gekennzeichnet, dass** sie das genannte, auf beiden Seiten des genannten Trägers (5) angeordnete, Gewebe (7) aufweist.

5. Vorrichtung gemäß Anspruch 2, **dadurch gekennzeichnet, dass** das genannte mindestens eine Gewebe (7) ein Einzelfadengewebe mit einem Maschenöffnungswert zwischen 10 und 400 Mikron und mit einem offenen Bereich zwischen 10 und 50 % ist.

6. Vorrichtung gemäß Anspruch 5, **dadurch gekennzeichnet, dass** das genannte mindestens eine Gewebe (7) ein Einzelfadengewebe mit 10 bis 250 Fäden/cm, einem Fadendurchmesser von 19 bis 200 Mikron und einer Maschenöffnung von 10 bis 400 Mikron ist.

7. Vorrichtung gemäß Anspruch 3, **dadurch gekennzeichnet, dass** der genannte mindestens eine Träger (5) aus einer Scheibe aus Kunststoffmaterial besteht, die Durchgangslöcher (6) mit einem Durchmesser zwischen 0,5 und 6 mm aufweist.

8. Vorrichtung gemäß Anspruch 7, **dadurch gekennzeichnet, dass** sie einen offenen Gesamtbereich zwischen 0,2 und 10 % aufweist, wobei der genannte offene Gesamtbereich der genannten Vorrichtung den Prozentsatz des Bereichs darstellt, der für den Durchlauf der Flüssigkeit durch die genannten Löcher (6) des starren Trägers (5) und durch die Maschen (8) des genannten Gewebes (7) vorhanden ist.

9. Vorrichtung gemäß einem oder mehreren der vorhergehenden Ansprüche, **dadurch gekennzeichnet, dass** sie einen offenen Gesamtbereich zwischen 0,2 und 10 % und mindestens einen Träger (5a) mit Löchern (6a) mit einem Durchmesser zwischen 0,5 und 6 mm in Kombination mit einem Gewebe (7a) aus synthetischem Einzelfaden mit Maschen (8a) mit einer Maschenöffnung zwischen 10 und 400 Mikron aufweist.

10. Vorrichtung gemäß einem oder mehreren der vorhergehenden Ansprüche, **dadurch gekennzeichnet, dass** sie einen offenen Gesamtbereich zwischen 0,2 und 10 % und mindestens einen Träger (5b) mit Löchern (6b) mit einem Durchmesser zwischen 0,5 und 6 mm in Kombination mit einem Gewebe (7b) aus synthetischem Einzelfaden mit Maschen (8b) mit einer Maschenöffnung zwischen 10 und 400 Mikron aufweist.

## Revendications

1. Dispositif pour former des turbulences dans un liquide à partir de mélanges solide/liquide, **caractérisé en ce qu'**il comprend au moins un tissu tissé (7) en monofilament synthétique formé comme un seul corps par co-moulage sur au moins une face d'au moins un support (5) en matière plastique muni de trous traversants (6), dans lequel ledit tissu tissé (7) est incorporé dans l'épaisseur dudit support (5) formant ainsi un seul corps, ladite opération de co-moulage étant réalisée en injectant sous pression sur ledit tissu tissé (7) le polymère fondu formant ledit support (5), en laissant ouvertes les zones du tissu tissé qui sont situées en correspondance des trous (6) du support (5) et à travers lesquelles passe le liquide devant être soumis à la formation de turbulences, dans lequel le positionnement des mailles du tissu tissé par rapport auxdits trous (6) du support (5), et par conséquent les ouvertures pour la formation des turbulences, sont maintenues uniformes et constantes sur toute la surface dudit dispositif traversée par la phase liquide.

2. Dispositif selon la revendication 1, **caractérisé en ce que** ledit monofilament synthétique est en polyester ou en polyamide.

3. Dispositif selon la revendication 1, **caractérisé en ce qu'**il prévoit des supports rigides (5) fixés sur les deux faces dudit tissu tissé (7), leurs trous (6) étant disposés de façon mutuellement alignée dans la direction transversale desdits supports.

4. Dispositif selon la revendication 1, **caractérisé en ce qu'**il prévoit ledit tissu tissé (7) disposé sur les deux faces dudit support (5).

5. Dispositif selon la revendication 2, **caractérisé en ce que** ledit au moins un tissu tissé (7) est un tissu tissé monofilament avec une valeur d'ouverture de maille comprise entre 10 et 400 microns et avec une surface ouverte comprise entre 10 et 50 %.

6. Dispositif selon la revendication 5, **caractérisé en ce que** ledit au moins un tissu tissé (7) est un tissu tissé monofilament avec 10 à 250 fils/cm, un diamètre de fil de 19 à 200 microns et une ouverture de maille de 10 à 400 microns.

7. Dispositif selon la revendication 3, **caractérisé en ce que** ledit au moins un support (5) est constitué d'un disque en matière plastique, présentant des trous traversants (6) d'un diamètre compris entre 0,5 et 6 mm.

8. Dispositif selon la revendication 7, **caractérisé en ce qu'**il présente une surface totale ouverte comprise entre 0,2 et 10 %, dans laquelle ladite surface totale ouverte dudit dispositif représente le pourcentage de la surface disponible pour le passage du liquide à travers lesdits trous (6) du support rigide (5) et à travers les mailles (8) dudit tissu tissé (7).

9. Dispositif selon une ou plusieurs des revendications précédentes, **caractérisé en ce qu'**il présente une surface totale ouverte comprise entre 0,2 et 10 % et au moins un support (5a) présentant des trous (6a) d'un diamètre compris entre 0,5 et 6 mm, en combinaison avec un tissu tissé (7a) en monofilament synthétique ayant des mailles (8a) avec une ouverture de maille comprise entre 10 et 400 microns.

10. Dispositif selon une ou plusieurs des revendications précédentes, **caractérisé en ce qu'**il présente une surface totale ouverte comprise entre 0,2 et 10 % et au moins un support (5b) ayant des trous (6b) d'un diamètre compris entre 0,5 et 6 mm, en combinaison avec un tissu tissé (7b) en monofilament synthétique ayant des mailles (8b) avec une ouverture de maille comprise entre 10 et 400 microns.
